Europäisches Patentamt

European Patent Office

Office européen des brevets

(19)

(11) Publication number: **0 046 663**
**B1**

# EUROPEAN PATENT SPECIFICATION

(12)

(45) Date of publication of patent specification: **27.06.84**

(51) Int. Cl.³: **F 16 K 5/06**

(21) Application number: **81303803.1**

(22) Date of filing: **20.08.81**

(54) **Fluid flow control valve with fire-safe seal.**

(30) Priority: **25.08.80 US 180980**

(43) Date of publication of application:
**03.03.82 Bulletin 82/9**

(45) Publication of the grant of the patent:
**27.06.84 Bulletin 84/26**

(84) Designated Contracting States:
**DE FR GB IT NL**

(56) References cited:
DE - A - 1 425 699
DE - A - 1 650 611
DE - A - 1 675 412
DE - A - 1 750 218
DE - A - 2 832 607
DE - B - 1 283 624
DE - B - 1 817 614
DE - U - 6 920 852
FR - A - 1 529 903
FR - A - 1 572 497
FR - E - 91 278
GB - A - 978 601
US - A - 2 191 232
US - A - 2 660 398
US - A - 3 480 253
US - A - 4 286 614

(73) Proprietor: **GROVE VALVE AND REGULATOR COMPANY**
**6529 Hollis Street**
**Oakland California 94608 (US)**

(72) Inventor: **Ripert, Roger L.**
**3748 Barrington Drive**
**Concord California (US)**

(74) Representative: **Williams, Trevor John**
**J.A. KEMP & CO. 14 South Square Gray's Inn**
**London WC1R 5EU (GB)**

Courier Press, Leamington Spa, England.

## Description

This invention relates to a fluid flow control valve with a fire safe seal.

Valves for controlling the flow of liquids and gases often employ main seal rings of resilient materials in order to effect a more fluid-tight seal. However, when such valves are used in pipelines or other fluid flow systems which conduct combustible materials, such seal rings are subject to destruction in the event of fire, when they are needed most from the stand-point of safety. Accordingly, it is highly desirable to prevent flow of the fluid to aid or foster combustion and to keep it confined, in the event of failure of the principal seal.

In US—A—4 286 614 there is shown a fluid flow control valve with a fire safe seal having a valve body, a closure member mounted in said body for movement between open and closed positions, an internal cylindrical surface in the body adjacent to said closure member, a metallic seat ring slidable in the internal surface, an annular recess in the leading face of the seat ring, a sealing ridge integral with that leading face and having a smaller diameter than the annular recess, providing a metal-to-metal seal in the event of destruction of said resilient seal ring, a resilient seal ring in and protruding from the recess to seal off fluid flow when urged against the closure member, and biasing means urging said seat ring against said closure member. While this construction does have a fire-safe feature in that should the resilient seal ring burn out the seat ring is urged against the closure member to provide a metal-to-metal seal the only sealing action provided between the seat ring and the internal cylindrical surface within which it slides is a metal back-up ring which is in sliding contact with the cylindrical surface. Such a back-up ring cannot be reliable and can only serve to restrict, rather than prevent, leakage flow, especially if the pressures concerned are relatively high. Also the sealing action is virtually completely dependent upon the provision of springs with the sealing force generally being less effective in the condition of the valve after burn-out of the resilient sealing means as compared with the sealing action under normal conditions when the resilient seal ring is present.

The present invention is directed at providing an improved valve in which the only possible leakage path, even after failure of the resilient seal, is between the seat ring and the valve closure member against which the seat ring is pressed. Additionally the structure of the present invention is such that upon failure of the primary resilient seal in addition to the seat ring being urged against the closure member by spring means there is an increased closure force exerted by upstream pressure.

The present invention is characterised in that the fire-safe seal comprises a thin, flexible, annular metallic diaphragm sealingly fixed at its periphery to the body and at its inner edge to the seat ring; said diaphragm being interposed between the seat ring and the biasing means, and in that the sealing ridge is a narrow metallic annular sealing lip protruding from the leading face of the seat ring within the area circumscribed by the annular recess.

In the later described preferred embodiment a plurality of springs acting against the back of the seat ring, with the diaphragm interposed between, biases the seat ring against the closure member, with, when the valve is closed, this force being augmented by upstream pressure acting against the back of the seat ring opposed by the pressure against the front of the seat ring out as far as the main seal diameter. Accordingly, over the area radially outward of the seal ring, the line pressure is not balanced, and effects a piston action. Should the main seal be destroyed by fire, the sealing is effected by a sealing ridge on the front face of the seat ring which is concentric to and smaller than the main, resilient seal. Since metal-to-metal seal is on a smaller diameter, the unbalanced pressure effect is over a large area to generate an increased piston action.

The invention will be further described, by way of example, with reference to the accompanying drawings, wherein:

Figure 1 is a vertical section view of a ball valve including a fire-safe seal and embodying the present invention;

Figure 2 is an enlarged part section view of the seal ring of the ball valve showing normal sealing operation;

Figure 3 is an enlarged part section view similar to Figure 2 but showing the seal ring after destruction of the main seal; and

Figures 4, 5 and 6 are enlarged part section views illustrating steps in the installation of the fire-safe seal.

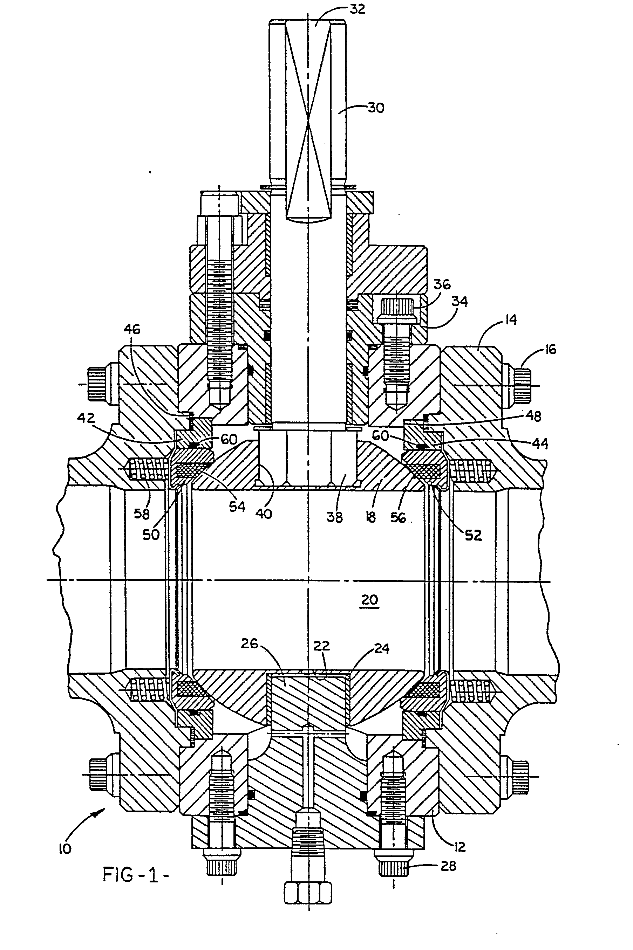

Referring now to Figure 1, a ball valve 10 is shown which includes a body band 12 to which end enclosures 14 are bolted at 16.

A ball 18 having a flow passage therethrough has a socket 22 at the bottom lined by a bearing 24 to be received rotatably on a trunnion 26 which is bolted to the body band at 28. At the top, a valve stem 30, having a flattened portion 32 for a wrench or spanner, is rotatably received in a bearing block 34 which is bolted to the body band at 36. The lower end of the stem 30 is of polygonal cross-section to be received in a complementary socket 40 in the ball so that rotation of the stem 30 will produce rotation of the ball 18.

A pair of body rings 42 and 44 are received in recesses 46 and 48 in the body band 12, and clamped therein by the end closures 14. Slidable inside the body rings 42 and 44 are seat rings 50 and 52 which carry resilient seals 54 and 56 to seal against the ball 18, sealing contact initially being effected by springs 58. An O-ring 60 may, as shown, be carried in the body rings 42 and 44 to seal against the outer surface of the seat rings 50 and 52.

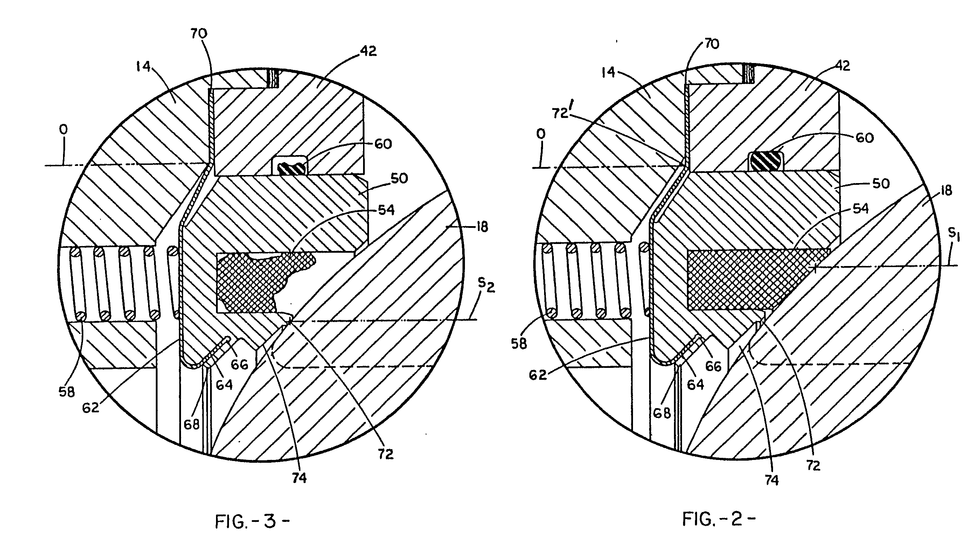

Referring now to Figure 2, a thin, annular flexible metallic diaphragm 62 is clamped at its inner edges 64 to the seat ring 50, being securely held in a groove 66 by a thin lip 68, which is pressed against it. The outer portions of the diaphragm 62 are clamped between the end closure 14 and the body ring 42. Hence, the diaphragm 62 forms a complete seal between the seat ring 50 and the valve body 12, 14 actually rendering the O-ring seal 60 redundant. Formed at the front of the seat ring is a relatively narrow sealing ridge 72 which protrudes from the leading face 74 of the seat ring 50. However, in normal operation of the resilient seal 54 protrudes even further, so that the sealing ridge 72 is normally inactive.

In normal operation, the springs 58 bias the seat ring forward for initial sealing contact. Then, with the valve closed as illustrated, an effective sealing contact point $S_1$ is established some place across the face of the seal. Within this effective sealing circle line pressure acting on the seat ring 50, front and back is balanced, but on the upstream side of the valve, the pressure in the pipeline acting against the back of the seat ring over the annular area between that effective sealing circumference $S_1$ and an outer circumference O approximately at 72' where the diaphragm 62 bends out of contact with the body ring 42, is opposed only by a considerably lower pressure within the valve body 12. Hence, a very effective piston action is generated.

Referring now to Figure 3, in the event of destruction of the seal 54, the springs 58 and fluid pressure together drive the seat ring 50 forward to bring the sealing ridge 72 into sealing contact with the ball 18, so the effective sealing circle $S_2$ now moves inward to a location within the area of the sealing ridge 72. Therefore the area of unbalanced pressure increases to augment the piston action, when the metal-to-metal fire-safe emergency seal 72 is brought into effect.

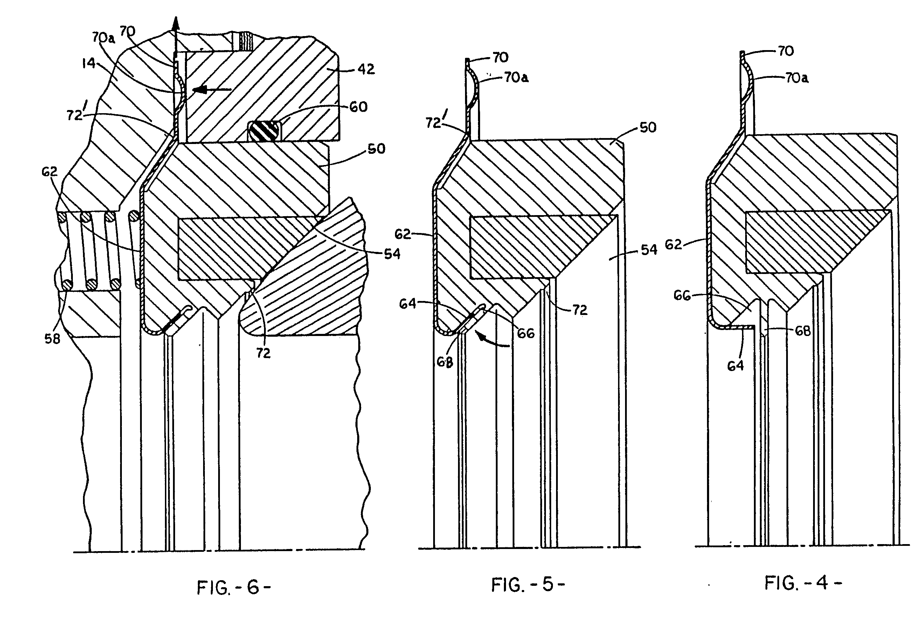

Referring now to Figures 5, 6 and 7, there are shown the steps in application of the metal diaphragm 62. As stamped, the diaphragm has an inner flange portion 64 and an outer clamping portion 70 with a bead 70a formed therein to augment sealing when clamped. The diaphragm 63 is bent back at 72 around the back of the seat ring 50.

When the diaphragm is placed as shown in Figure 5, the thin lip 68 or the seat ring 52 is crimped over, as indicated, to clamp the inner edges 64 of the diaphragm firmly. Finally, the seat ring is installed within the body ring 42 and the end closure 14, with springs 58 in place, is bolted to the body band by bolts 16 (Figure 1) to clamp the outer portions 70, flattening out the bead 70a, as indicated in Figure 6.

## Claims

1. A fluid flow control valve with a fire-safe seal having a valve body (12, 14), a closure member (18) mounted in said body for movement between open and closed positions, an internal cylindrical surface in the body adjacent to said closure member, a metallic seat ring (50) slidable in the internal surface, an annular recess in the leading face of the seat ring, a sealing ridge integral with that leading face and having a smaller diameter than the annular recess, providing a metal-to-metal seal in the event of destruction of said resilient seal ring, a resilient seal ring (54) in and protruding from the recess to seal off fluid flow when urged against said closure member, and biasing means (58) urging said seat ring against said closure member; characterized in that the fire-safe seal comprises a thin, flexible, annular metallic diaphragm (62) sealing fixed at its periphery (70) to the body (14) and at its inner edge (64) to the seat ring (50); said diaphragm (62) being interposed between the seat ring (50) and the biasing means (58), and in that the sealing ridge is a narrow metallic annular sealing lip (72) protruding from the leading face of the seat ring within the area circumscribed by the annular recess.

2. A valve as claimed in claim 1, charaterized by a body ring (42) concentric with said seat ring (50), the inner surface of the body ring forming said internal surface, and opposing means (14, 12) in the body clamping against the trailing and leading faces of said body ring (42), the outer portion (70) of the diaphragm (62) being clamped between one of said opposing means (14) and said body ring (42).

3. A valve as claimed in claim 2, characterized in that said valve body comprises a body band (12) and end closures (14) with flow passages therethrough bolted to said body band, a cylindrical recess (46) being provided in said body band adjacent one edge thereof with said body ring (42) being received in said recess (46) and clamped therein by one of said end closures; said outer portion (70) of the diaphragm being clamped between said end closure of the body ring.

4. A valve as claimed in claim 2 or 3, characterized in that an annular bead (70a) is formed around said outer portion (70) prior to clamping.

5. A valve as claimed in any preceding claim, characterized by a groove (66) in said seat ring (50) receiving the inner edge (64) of the diaphragm (62), the sides of the groove firmly gripping said inner edge.

6. A valve as claimed in claim 5, characterized in that a thin lip (68) around the seat ring (50) forms one side of said groove; said lip being crimped over to clamp firmly around said inner edge (62).

## Revendications

1. Soupape à réglage du débit à garniture ignifuge possédant un corps de soupape (12, 14), un élément de fermeture (18) monté dans ledit corps pour un mouvement entre des positions ouvertes et fermées, une surface interne cylindrique dans le corps adjacente audit élément de fermeture, un anneau de siège métallique (50) glissant dans la surface interne, un renfoncement annulaire dans la face avant de l'anneau de siège, une arête d'étanchéité d'une seule pièce avec cette face avant et possédant un diamètre plus petit que le renfoncement annulaire fournissant une étanchéité métal sur métal dans le cas de la destruction de l'anneau d'étanchéité résilient, un anneau d'étanchéité résilient (54) à l'intérieur du et dépassant du renfoncement pour bloquer l'écoulement de fluide lorsqu'il est pressé contre ledit élément de fermeture, et des moyens de contrainte (58) pressant ledit anneau de siège contre ledit élément de fermeture, caractérisée par le fait que la garniture ignifuge comprend un diaphragme mince (62) flexible annulaire et métallique fixé de façon étanche à sa périphérie (70) au corps (14) et à son bord intérieur (64) à l'anneau de siège (50), ledit diaphragme (62) étant interposé entre l'anneau de siège (50) et les moyens de contrainte (58), et que l'arête d'étanchéité est une lèvre d'étanchéité annulaire métallique étroite (72) faisant saillie de la face avant de l'anneau de siège dans la zone circonscrite par le renfoncement annulaire.

2. Soupape selon la revendication 1, caractérisée par un anneau de corps (42) concentrique audit anneau de siège (50), la surface intérieure de l'anneau de corps formant ladite surface interne, et des moyens d'opposition (14, 12) dans le corps bloqués contre les faces arrière et avant dudit anneau de corps (42), la partie extérieure (70) du diaphragme (62) étant pincée entre un desdits moyens d'opposition (14) et l'anneau de corps (42).

3. Soupape selon la revendication 2, caractérisée par le fait que ledit corps de soupape comprend une bande de corps (12) et des fermetures d'extrémité (14) avec des passages d'écoulement à travers eux boulonnés à ladite bande de corps, un renfoncement cylindrique (46) étant prévu dans ladite bande de corps adjacent à un des bords de cette dernière, ledit anneau de corps (42) étant reçu dans le dit renfoncement (46) et pincé à l'intérieur de ce renfoncement par une desdites fermetures d'extrémité, ladite portion extérieure (70) du diaphragme étant pincée entre ladite fermeture d'extrémité et l'anneau de corps.

4. Soupape selon l'une quelconque des revendications 2 et 3, caractérisée par le fait qu'un bourrelet annulaire (70a) est formé autour de ladite portion extérieure (70) avant le pinçage.

5. Soupape selon l'une quelconque des revendications précédentes, caractérisée par une rainure (66) dans ledit anneau de siège (50) recevant le bord intérieur (64) du diaphragme (62), les côtés de la rainure accrochant fermement ledit bord intérieur.

6. Soupape selon la revendication 5, caractérisée par le fait qu'une lèvre mince (68) autour de l'anneau de siège (50) forme un côté de ladite rainure, ladite lèvre étant gaufrée pour s'accrocher fermement autour dudit bord intérieur (62).

**Patentansprüche**

1. Durchflußregelventil mit feuersicherer Dichtung, das ein Ventilgehäuse (12, 14) aufweist, ferner ein im Ventilgehäuse angeordnetes bewegbares Verschlußglied (18) zur Bewegung zwischen einer offenen und einer geschlossenen Stellung, eine an das Verschlußglied angrenzende innere zylindrische Fläche im Ventilgehäuse, einen an dieser Innenfläche gleitenden metallischen Sitzring (50), eine ringförmige Aussparung in der Führungsfläche des Sitzringes, einen mit der Führungsfläche einteiligen Dichtungsrücken, der einen kleineren Durchmesser aufweist als die ringförmige Aussparung und bei einer Zerstörung eines elastischen Dichtungsringes eine Dichtung von Metall auf Metall ergibt, wobei der elastische Dichtungsring (54) in der Aussparung angeordnet ist, aus der Aussparung vorsteht und abdichtet, wenn er gegen das Verschlußglied gedrückt wird, und Federeinrichtungen (58), die den Sitzring gegen das Verschlußglied drücken, dadurch gekennzeichnet, daß die feuersichere Dichtung eine dünne flexible ringförmige metallische Membran (62) aufweist, die an ihrem Außenrand (70) in abdichtender Weise am Gehäuse (14) und mit ihrem Innenrand (64) in abdichtender Weise am Sitzring (50) befestigt ist, wobei die Membran (62) zwischen dem Sitzring (50) und den Federeinrichtungen (58) zwischengelegt ist, und daß der Dichtungsrücken eine schmale metallische ringförmige Dichtungslippe (72) ist, die innerhalb des durch die ringförmige Aussparung begrenzten Bereiches von der Führungsfläche des Sitzringes vorsteht.

2. Ventil nach Anspruch 1, gekennzeichnet durch einen zum Sitzring (50) konzentrischen Gehäusering (42), dessen innere Fläche die Innenfläche bildet, und durch gegenüberliegende Einrichtungen (14, 12) im Gehäuse zum Festklemmen an der Führungsfläche in der zugehörigen entgegengesetzt gerichteten Fläche des Gehäuseringes (42), wobei der äußere Abschnitt (70) der Membran (62) zwischen einer der gegenüberliegenden Einrichtungen (14) und dem Gehäusering (42) festgeklemmt ist.

3. Ventil nach Anspruch 2, dadurch gekennzeichnet, daß das Ventilgehäuse einen Gehäusereifen (12) und am Gehäusereifen festgeschraubte Endverschlüsse (14) mit Durchflußöffnungen aufweist, wobei im Gehäusereifen eine an einen Rand des Gehäusereifens angrenzende zylindrische Aussparung (46) vorgesehen ist, wobei der Gehäusering (42) in der Aussparung aufgenommen und durch einen der Endverschlüsse festgeklemmt ist, und daß der äußere Abschnitt (70) der Membran zwischen dem Endverschluß und dem Gehäusering festgeklemmt ist.

4. Ventil nach Anspruch 2 oder 3, dadurch gekennzeichnet, daß um den äußeren Abschnitt (70) vor dem Festklemmen ein ringförmiger Wulst (70a) ausgebildet wird.

5. Ventil nach einem der vorhergehenden Ansprüche, gekennzeichnet durch eine Rille (66) im Sitzring (50) zur Aufnahme des inneren Randes (64) der Membran (62), wobei die Seiten der Rille den inneren Rand fest ergreifen.

6. Ventil nach Anspruch 5, dadurch gekennzeichnet, daß eine um den Sitzring (50) umlaufende dünne Lippe (68) eine Seite der Rille bildet, wobei die Lippe zum Festklemmen um den inneren Rand (64) herumgefaltet ist.

FIG -1-

FIG. -2-

FIG. -3-

FIG. - 4 -

FIG. - 5 -

FIG. - 6 -